# EUROPEAN PATENT APPLICATION

(11) **EP 4 478 016 A1**
(43) Date of publication of application: **18.12.2024**
(21) Application number: 24181339.3
(22) Date of filing: 11.06.2024
(51) Int. Cl.: G01K 3/04, G01K 13/08

(54) **THIN FILM TEMPERATURE SENSOR AND METHOD**

(30) Priority: 13.06.2023 US 202318209260
(71) Applicant: RTX Corporation, Farmington, CT 06032 (US)
(72) Inventor: SHARON, John A., West Hartford, 06119 (US); THAYER, Henry H., Wethersfield, 06109 (US); DEACON, Ryan M., Colchester, 06415 (US); ZHU, Tianli, Glastonbury, 06033 (US); JACKSON III, Richard Wesley, Mystic, 06355 (US); BEALS, James T., West Hartford, 06107 (US)
(74) Representative: Dehns

(57) **Abstract**

A component (10) of an aero-propulsion apparatus, wherein the component (10) includes a material and has a surface, and a thin film (20) on the surface, wherein the thin film (20) is configured to undergo a detectible change in properties when exposed to a temperature exceeding a threshold temperature. Methods are also disclosed.

## Description

### BACKGROUND OF THE DISCLOSURE

The disclosure relates to protection of parts such as components of a gas turbine engine from temperature exceeding a threshold and, more particularly, to thin films and methods for applying and using thin films that sense when a part has been exposed to temperature exceeding a threshold.

Many components for aero-propulsion applications, for example components of gas turbine engines, are made from temperature sensitive materials which are designed and processed to offer maximum performance (mechanical strength, creep resistance, fatigue life, etc.) so long as the part is kept at or below a threshold temperature.

If a part experiences a hotter environment than it is intended for, the material from which the part is manufactured can undergo microstructure and other changes that can change the properties of the material in an adverse manner, for example compromising performance and/or resulting in premature part failure.

As one example, a gamma-gamma prime single crystal nickel superalloy that experiences ≥ 1,000°C can lose creep resistance. It is desirable to have a means to detect if a part has experienced a deleteriously high temperature.

Active temperature sensors can be in the form of thermocouples and can require complex wiring to monitor temperature. Non-contact methods are possible, but parts can often be rotating or occluded such that a line of sight to the component is not viable.

### SUMMARY OF THE DISCLOSURE

The disclosure relates to thin films and methods relating to same which provide a means, during regular maintenance intervals, to probe parts to detect whether or not an over temperature event has occurred. Being able to readily detect a temperature event is beneficial as it helps to avoid premature failure if a part is heated above its threshold but the event is not detected, and also to avoid scrapping/replacing parts suspected to have experienced an over-temperature event when in fact they may not have actually experience the over-temperature and/or are still safe to use.

In one non-limiting example, a component of an aero-propulsion apparatus, wherein the component comprises a material and has a surface, and a thin film on the surface, wherein the thin film is configured to undergo a detectible change in properties when exposed to a temperature exceeding a threshold temperature.

In one non-limiting configuration, the component is a component of a gas turbine engine.

In another non-limiting configuration, the thin film is configured to undergo at least one of a change in crystalline structure, a change in electrical properties, a change in optical properties and a change in surface roughness when exposed to the temperature exceeding the threshold temperature.

In still another non-limiting configuration, the thin film is a single film on the surface.

In a further non-limiting configuration, the thin film is a monolithic film.

In a still further non-limiting configuration, the thin film has a thickness of less than or equal to 1 micrometer.

In another non-limiting configuration, the material has a rated temperature, and wherein the threshold temperature is less than or equal to the rated temperature.

In still another non-limiting configuration, the thin film is selected from the group consisting of alumina, hafnia, platinum and mixtures and laminates thereof.

In a further non-limiting configuration, the thin film comprises a first thin film having a first threshold temperature (T1) and a second thin film having a second threshold temperature (T2), whereby the thin film can sense when temperature has reached two different threshold temperatures.

In a still further non-limiting configuration, the component further comprises at least one of an additional film between the component and the thin film for compatibility, and a film over the thin film to protect the thin film.

In another non-limiting configuration, the thin film has an amorphous structure, and when exposed to temperature in excess of the threshold temperature, the amorphous structure changes to a crystalline structure.

In another non-limiting example, a method for making a component having a sensor of temperature exceeding a threshold temperature, comprises applying a thin film to a surface of the component, wherein the component comprises material having a rated temperature, and wherein the thin film is configured to undergo a detectible change when exposed to temperature greater than a threshold temperature, wherein the threshold temperature is less than or equal to the rated temperature.

In a non-limiting configuration, the thin film is applied using atomic layer deposition.

In another non-limiting configuration, the thin film is applied having a thickness of less than 1 micrometer.

In still another non-limiting configuration, the thin film is applied in an atomic layer deposition from two gases.

In another non-limiting example, a method for determining whether a component has been exposed to a temperature exceeding a threshold temperature comprises operating an apparatus comprising the component, wherein the component comprises a material and has a surface, and a thin film on the surface, wherein the thin film is configured to undergo a detectible change in properties when exposed to the temperature exceeding the threshold temperature; and determining whether the thin film has undergone the detectible change in properties.

In one non-limiting configuration, the determining step is conducted during maintenance of the apparatus.

In another non-limiting configuration, the thin film is configured to undergo at least one change in properties selected from the group consisting of a change in crystalline structure, a change in electrical properties, a change in optical properties and a change in surface roughness when exposed to the temperature exceeding the threshold temperature, and wherein the determining step comprises inspecting the thin film for the at least one change in properties.

In still another non-limiting configuration, when the determining step detects the at least one change in properties, the component can be removed from service, and when the determining step does not detect the at least one change in properties, the component can be left in service.

In a further non-limiting configuration, the thin film comprises an atomic layer deposited monolithic thin film.

### BRIEF DESCRIPTION OF THE DRAWINGS

A detailed description of preferred embodiments follows, with reference to the attached drawings, wherein:
FIG. 1 illustrates an exemplary component having a thin film as disclosed herein;
FIG. 2 is a schematic sectional view showing a component with thin film;
FIG. 3 schematically illustrates an ALD process to apply a thin film;
FIG. 4 illustrates one method of detecting property change in a thin film that can indicate exposure to temperature exceeding a threshold temperature;
FIG. 5 is a flow chart illustrating the selection and application of a suitable thin film, and then placing a component with the thin film into service followed by maintenance and checking the thin film;
FIG. 6 schematically illustrates alternative configurations of component and thin film as disclosed herein; and
FIG. 7 schematically illustrates a thin film sensor based upon diffusion between two layers.

### DETAILED DESCRIPTION

The present disclosure relates to application of thin film coatings to components such as gas turbine engine components or other parts that can be made from materials that provide excellent properties in use as long as they are not exposed to an environment with temperature too high for the material. When exposed to such high temperatures, however, the material can experience changes such that some or all of the desired properties of the material are reduced or lost.

One example of such a material is gamma-gamma prime single crystal nickel superalloy, which is a material that provides good properties at expected temperatures. However, when this superalloy is exposed to temperatures that exceed 1,000°C, the material can lose creep resistance. Monitoring such materials and components made from these materials for exposure to temperatures that are too high remains problematic. For example, active temperature sensors such as thermocouples require complex wiring to monitor temperature. Further, non-contact methods are possible but can also be difficult to use reliably in environments where components can be rotating or occluded or where line of sight to the component is not available.

As disclosed herein, a thin film can be applied to one or more surfaces of such a component, where the thin film is selected from materials such that the thin film is configured to undergo a detectible change in properties when it is exposed to a temperature that is at or greater than a threshold temperature of the thin film. After putting the component or part in service, the film can be checked during maintenance to determine if the part has been exposed to temperatures that are higher than intended.

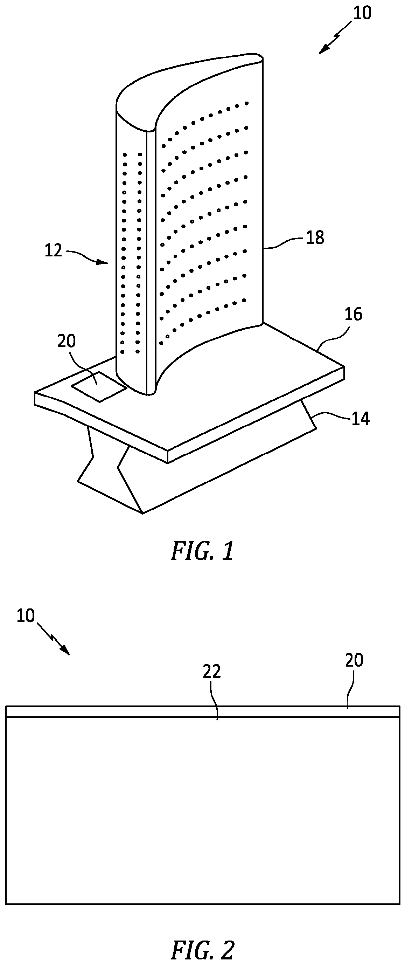

FIG. 1 illustrates a component 10, in this case a turbine blade 12 having a root 14, platform 16 and blade 18. Blade 12 in use can be exposed to significantly high temperatures, for example in a high-pressure turbine of a gas turbine engine. Further, the high-speed rotation of the component during use and other concerns contribute to making it difficult to monitor temperature of blade 12 with a thermocouple or other non-contact methods that may require a line of sight. Thus, in one configuration, blade 12 can be provided with a thin film 20 that is configured to undergo a detectible change in properties when exposed to a certain threshold temperature.

While FIG. 1 shows component 10 as a blade of a gas turbine engine, it should be appreciated that numerous other components particularly in the field of aero-propulsion can be made of material that is designed to provide desired properties but which is also susceptible to loss of these properties when exposed to temperature that is too high. Thus, other components that could be provided with a thin film as disclosed herein include but are not limited to shafts, vanes, combustor components, struts, and the like as components of aero-propulsion applications. Further, other areas where components can be exposed to temperatures that need to be monitored include components of numerous other high temperature products including, for example, brake components for various vehicles.

FIG. 2 shows a schematic illustration of a component 10 having thin film 20 disposed along an upper or outer surface 22 of component 10. Thin film 20 can be applied over an entire surface of a component, or can be applied in a small zone or area of component 10 as shown in FIG. 1, where thin film 20 is shown applied to an upper or outboard surface of platform 16.
In some instances, there are areas of a component where it is known in advance that such area is where the highest temperature is experienced, and so this may be an ideal location for application of the thin film in instances where the film is not to be applied to an entire surface of the component.

As set forth above, thin film 20 can be a film having one or more properties that undergo a detectible change when exposed to high temperature. In one non-limiting configuration, this is accomplished by applying the thin film such that the film has an amorphous structure, and using materials that, when exposed to temperature in excess of a threshold temperature, will change form to a crystalline structure. Such a change in structure can then be readily detected during maintenance of the part or assembly containing the part.

Examples of materials that can be applied having amorphous structure and that will phase change to a crystalline structure include but are not limited to alumina, hafnia, platinum, and mixtures or laminates thereof. As a thin film, for example, alumina can be applied amorphous and will phase change to a crystalline structure at a temperature of about 900°C. Hafnia can be applied amorphous and will phase change to a crystalline structure at a temperature between 500 and 900°C. These temperatures, referred to as threshold temperatures, can be adjusted by using different materials, deposition conditions, film thicknesses and the like, such that the threshold temperature of the thin film to be utilized can be customized to rated temperatures of different materials.

Some components in use are expected to encounter particularly high temperatures, for example components that are along the gas path of a gas turbine engine, still further but without limitation, components of high-pressure turbines and the like. In such conditions, the component may be protected by a ceramic thermal barrier coating (TBC) to allow the component to withstand the expected high temperatures. As discussed below, when this is the case, two further considerations are relevant. First, the threshold temperature of the component is likely not the ceramic surface (TBC) of the component, but materials of the component itself, which may for example be metallic alloy. In such circumstances, the thin film threshold temperature should be matched to the rated temperature of the metallic alloy. Further, in order for the thin film to remain in place and function as intended under such temperatures, it may be useful for the thin film itself to be ceramic in nature such that the thin film remains in place and is not destroyed during use.

The thin film can act as a sensor and the film that does so can advantageously be a single later film. In addition, however it should also be appreciated that a compatibility film can be applied to the substrate in advance of the thin film to help with adhesion to the component. Further, a protective film or layer can be applied over the thin film to protect the thin film during operation of the component. These configurations can be referred to as bi-layer and tri-layer configurations.

In a further non-limiting configuration, a component can be provided with two different thin films, one having a first threshold temperature (T1) and the other having a second, different, threshold temperature (T2). For example, a component could be provided with a first thin film of hafnia having a threshold temperature (T1) of 500°C and a second thin film of alumina having a threshold temperature (T2) of 900°C. After the component has been placed in service and is to be maintained, each thin film can be checked for phase change and, by so doing, it can be determined if the maximum temperature the component was exposed to was below 500°C, between 500°C and 900°C, or greater than 900°C. Additional different thin films could be deployed to increase the number of different ranges that can be sensed.

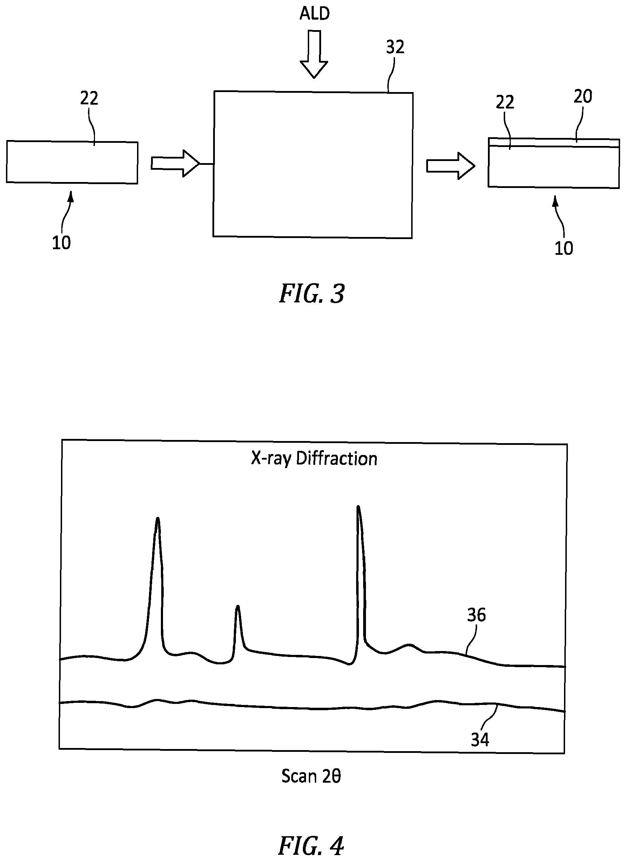

One suitable but non-limiting method of applying such a thin film or films as disclosed herein is the use of atomic layer deposition (ALD), wherein very thin layers of atoms of the desired materials can be deposited. FIG. 3 schematically illustrates such a process, wherein a component 10 is positioned within a chamber 32, and atomic layer deposition is carried out, for example through sequentially introducing different gas species into chamber 32 whereby the desired thin film is deposited on a surface 22 of component 10 to produce a thin film coating 20 on surface 22.

Numerous different materials can be applied using ALD. These can be applied by sequentially exposing the surface to vapor phase constituents. For example, materials can be selected to deposit a thin film of Al₂O₃, which can be tailored to present a useful threshold temperature of transition from amorphous to crystalline phase. Another example of ALD could be a deposition that is alternated between vapor phase, for example vapor phases of trimethylaluminum (TMA) and H₂O. Alternating between deposition from these vapor phases can produce a thin film of alumina (Al₂O₃).

In one non-limiting configuration, thin film layers can be applied having thicknesses typically less than or equal to 1 micrometer. In another configuration, the thin film can have a thickness of between 20 nanometers and 1 micrometer. This helps to produce a thin film that can act as a sensor of high temperature, and also that does not interfere with the shape or fluid flow characteristics of the component.

Properties of the thin film that can undergo a detectible change with temperature include but are not limited to crystal structure, electrical properties, optical properties, surface roughness and even combinations thereof. These properties can then be measured or sensed in the thin film to check for change indicative of having been exposed to high temperature, that is, a temperature higher than the threshold temperature of the thin film.

With these different properties, different approaches can be used to detect the change, and thus to conduct the part inspection during maintenance. For example, if a thin film is utilized that changes in crystal structure, the part can be probed with x-ray diffraction or instrumented indentation to detect a change in the crystal structure. If electrical properties change in a particular material when exposed to temperature in excess of the threshold temperature, then this can be checked by probing using a four (4) point probe. In another non-limiting configuration, when the thin film property to undergo a detectable change is an optical property, this can be detected using ellipsometry. Finally, for the example where the property is surface roughness, this can be detected by probing via profilometry.

In one configuration, the thin film can be a monolithic layer, having substantially homogeneous material in a single layer, for example that starts with amorphous structure and that changes to a crystalline structure when exposed to sufficient temperature. In other configurations, multiple layers are included in the thin film to produce additional functionality as discussed below.

FIG. 4 shows one non-limiting example wherein the property that will undergo an identifiable change is the crystal structure. FIG. 4 shows the scan 20 of an x-ray diffraction probing of a thin film on a component. A baseline 34 corresponds to an amorphous crystal structure. When the film has been exposed to temperature above the threshold temperature, the thin film undergoes a phase change to crystalline, and x-ray diffraction will now present a signal as shown in FIG. 4 at 36, which represents a crystalline structure. A thin film presenting this type of x-ray diffraction signal would indicate a thin film that has been exposed to temperature in excess of a threshold temperature of the thin film, and thereby a component which has been exposed to a temperature exceeding a suitable temperature for one or more materials of the component.

Different temperatures are referred to in this disclosure. In one instance, a temperature beyond which a component should not be heated is referred to herein as a rated temperature. Thus, for example, a component may have a rated temperature of 900°C, which would indicate that this component should not be exposed to temperatures in excess of 900°C. This rated temperature is largely a factor of the material or materials from which the component is made or formed, and perhaps including the structure of the component, the function of the component, how often the component can reasonably be inspected, and others. Further, the material having the limiting temperature need not be on the surface of the component. For example, components of gas turbine engines frequently have a ceramic layer or coating on or close to an outside surface to serve as a thermal barrier or other form of protection for the component. Typical ceramics for these layers or coatings can themselves frequently be exposed to a much greater temperature than the underlying base material of the component, which could be an alloy as mentioned above and the like. In these circumstances, the component would have a rated temperature corresponding to the material of the component having the lowest acceptable temperature exposure.

On the other hand, the threshold temperature referred to herein is the temperature at which the thin film will undergo the detectable change in properties. Thus, for the example above, a thin film could be applied that would have a threshold temperature of close to but not greater than 900°C. The threshold temperature of a thin film is a product of several things, including but not limited to the deposition parameters and chemistry during the ALD. These parameters can be selected to tailor the threshold temperature of the thin film to be close to but still less than the rated temperature of the component. In order to function as intended at such high temperatures, for example exceeding 900°C, the thin film itself needs also to be able to withstand such temperature, except for the intended detectible change, and this the thin film can be applied as a ceramic thin film as well in order to function as intended.

In another non-limiting configuration, a thin film could be utilized that breaks down or is removed upon exceeding the threshold temperature, and thus the method of inspecting this component would involve checking to see if the film is still in place.

Still further, in another configuration, the material can be selected such that the thin film originally has an agglomerate structure, and when exposed to a temperature that is greater than the threshold temperature, the structure can change from agglomerate to conglomerate.

In a further non-limiting configuration, the detectible change can be a diffusion mechanism. In this configuration, a first layer of one material can be followed with a second layer of a different material, and the interface can be checked during maintenance to see if and to what extent there has been diffusion of the materials at the interface. This is a good indicator of temperature because certain combinations of materials will only diffuse after having been exposed to certain elevated temperatures for a sufficient period of time. One example of such a configuration is a first layer of silica (SiO₂) and a second layer of hafnia (HfO₂). If this 2-layer configuration is exposed to sufficient temperature as a threshold temperature, at the interface there will be a layer of hafnium silicate (HfSiO₄). Further, another configuration could have a first layer of magnesium oxide (MgO) and a second layer of alumina (Al₂O₃). If this 2-layer configuration is exposed to sufficient temperature, at the interface there will be a layer of MgAl₂O₄.

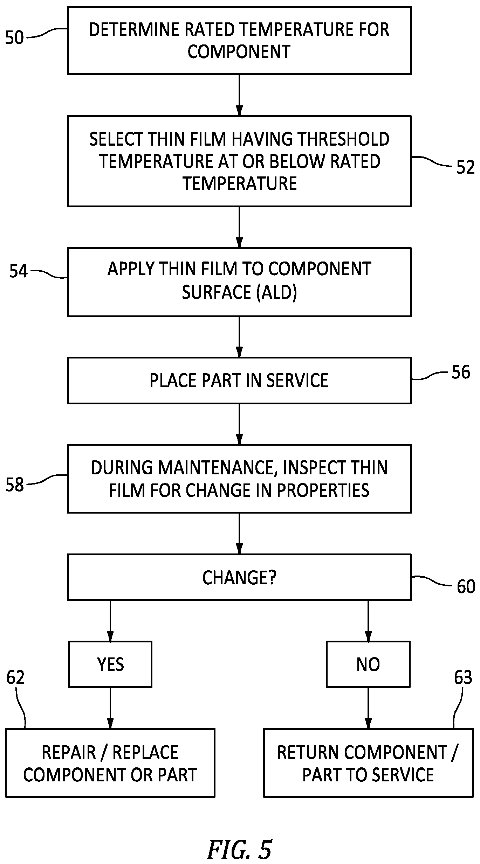

Turning now to FIG. 5, related methods are disclosed. Specifically, FIG. 5 begins with steps that can be followed to apply a suitable thin film. As shown in step 50, a method can begin by determining a rated temperature for a component of interest. As set forth above, this can be based upon the general physical structure of the component, the material(s) from which the component is made, a suitable engineering safety factor and the like. Once the rated temperature is determined, a thin film can be selected that will have a threshold temperature at or below the rated temperature of the material of the component, as shown in step 52.

As indicated in step 54, a thin film of the material is now applied or deposited onto the component. The thin film can advantageously be applied using atomic layer deposition, although other techniques could be utilized within the broad scope of this disclosure. At this stage, it can also be decided whether the thin film is to be applied locally, to only one specific spot or location of a component (as shown in FIG. 1), or if a more global application of the thin film, for example to a large portion or entire surface of a component, might be called for.

Once the thin film is applied, the component or part can be placed into service (step 56) for a normal maintenance interval. When it is time to maintain the component or assembly containing the component (step 58), a suitable inspection method can be used based upon the property of the thin film that is expected to change, and this inspection can inform the user whether the properties have changed (step 60). If yes, then the component can be designated for repair or replacement (step 62). If there is no change in properties of the thin film, then it can be concluded that the component was not exposed to temperature above the rated temperature, or the threshold temperature, and therefore that the component or part can be safely returned to service (step 63).

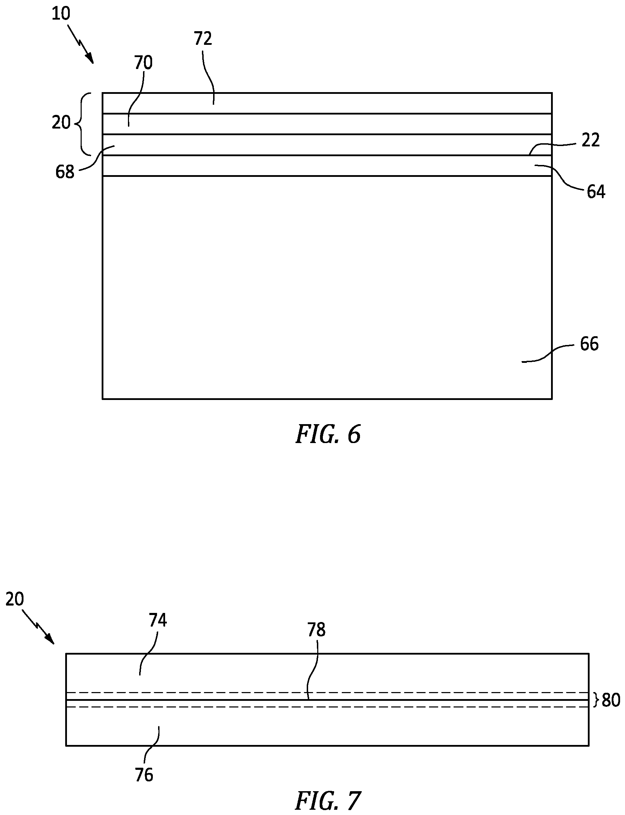

Turning now to FIG. 6, a schematic representation of some of the alternative configurations discussed above is provided. FIG. 6 shows component 10 having surface 22 on which thin film 20 is applied. However, in this configuration, a ceramic thermal barrier layer 64 is positioned over the underlying metal or metal alloy material 66 of the component. In this configuration, the temperature rating of the component is likely the maximum temperature for the metal or metal alloy 66 beneath the thermal barrier layer 64. Thus, the thin film can be configured to have a threshold temperature based upon a rated temperature for material that is not the surface of the component itself. Further, and as set forth above, under these circumstances, the thin film must be tailored to function as intended at the high temperatures to be encountered by components that have thermal barrier coatings. In one non-limiting example, the thin film can be deposited in a manner wherein the film is itself a ceramic thin film, with a suitable threshold temperature for phase change.

Further, FIG. 6 shows thin film 20 as a multilayer structure wherein layer 68 can be a compatibility layer as mentioned above, layer 70 can be an actual sensor layer having the desired phase change properties, and layer 72 can be a protective layer to protect layer 70. FIG. 6 shows all of these additional features in a single drawing, but it should be appreciated that each of these additional features is optional and could be employed alone or in any combination with the other features likewise illustrated in FIG. 6. Thus, this drawing should be considered as illustrating each of these features alone and also in any combination with the other features shown therein.

FIG. 7 further illustrates the diffusion configuration discussed above, wherein thin film 20 can be a multi-layer film having a first layer 74, a second layer 76, and an interface 78 between layers 74, 76. After exposure to a threshold temperature for a period of time, diffusion occurs at the interface 78 to create a detectible layer 80 of diffused material from both layers. This diffused detectible layer 80 is illustrated in FIG. 7 in broken lines above and below interface 78. Of course, depending upon the materials of layers 74, 76, diffused detectible layer 80 would not necessarily be centered on interface 78, and could extend more into one or the other layers. In this configuration, the presence and thickness of the diffused detectible layer can indicate temperature exceeding a threshold temperature and also a duration of this temperature which is related to the thickness of layer 80.

It should be appreciated that the disclosed apparatus and method suitably allow for parts or components to be quickly checked for loss due to excessive temperature. The thin film and functionality provided by same are passive and benign to the part. The detection provided by thin films as disclosed herein helps to avoid premature failure if a part is heated above its threshold temperature but the event is not otherwise detected. Further, this use of thin films as sensors helps avoid scrapping/replacing parts that are suspected to have experienced an over temperature even when in fact they will still be safe to use.

One or more embodiments of the present disclosure have been described. Nevertheless, it will be understood that various modifications may be made without departing from the spirit and scope of the disclosure as presented in the attached claims. Accordingly, other embodiments are within the scope of the following claims.

## Claims

1. A component (10) of an aero-propulsion apparatus, the component (10) comprising a material (66) and having a surface (22), and a thin film (20) on the surface (22), wherein the thin film (20) is configured to undergo a detectible change in properties when exposed to a temperature exceeding a threshold temperature.

2. The component of claim 1, wherein the component (10) is a component (10) of a gas turbine engine.

3. The component of claim 1 or 2, wherein the thin film (20) is configured to undergo at least one of a change in crystalline structure, a change in electrical properties, a change in optical properties and a change in surface roughness when exposed to the temperature exceeding the threshold temperature.

4. The component of any preceding claim, wherein:
the thin film (20) is a single film (20)on the surface (22); and/or
the thin film (20) is a monolithic film (20); and/or
the thin film (20) has a thickness of less than or equal to 1 micrometer.

5. The component of any preceding claim, wherein the material (66) has a rated temperature, and wherein the threshold temperature is less than or equal to the rated temperature.

6. The component of any preceding claim, wherein the thin film (20) is selected from the group consisting of alumina, hafnia, platinum and mixtures and laminates thereof.

7. The component of any preceding claim, wherein the thin film (20) comprises a first thin film having a first threshold temperature (T1) and a second thin film having a second threshold temperature (T2), whereby the thin film (20) can sense when temperature has reached two different threshold temperatures.

8. The component of any preceding claim, further comprising at least one of an additional film (68) between the component (10) and the thin film (20; 70) for compatibility, and a film (72) over the thin film (20; 70) to protect the thin film (20; 70).

9. The component of any preceding claim, wherein the thin film (20) has an amorphous structure, and when exposed to temperature in excess of the threshold temperature, the amorphous structure changes to a crystalline structure.

10. A method for making a component (10) having a sensor of temperature exceeding a threshold temperature, the method comprising applying a thin film (20) to a surface (22) of the component (10), wherein the component (10) comprises material (66) having a rated temperature, and wherein the thin film (20) is configured to undergo a detectible change when exposed to temperature greater than a threshold temperature, wherein the threshold temperature is less than or equal to the rated temperature.

11. The method of claim 10, wherein:
the thin film (20) is applied using atomic layer deposition; and/or
the thin film (20) is applied having a thickness of less than 1 micrometer; and/or
the thin film (20) is applied in an atomic layer deposition from two gases.

12. A method for determining whether a component (10) has been exposed to a temperature exceeding a threshold temperature, the method comprising:
operating an apparatus comprising the component (10), wherein the component (10) comprises a material (66) and has a surface (22), and a thin film (20) on the surface (22), wherein the thin film (20) is configured to undergo a detectible change in properties when exposed to the temperature exceeding the threshold temperature; and
determining whether the thin film (20) has undergone the detectible change in properties.

13. The method of claim 12, wherein the determining step is conducted during maintenance of the apparatus.

14. The method of claim 12 or 13, wherein the thin film (20) is configured to undergo at least one change in properties selected from the group consisting of a change in crystalline structure, a change in electrical properties, a change in optical properties and a change in surface roughness when exposed to the temperature exceeding the threshold temperature, and wherein the determining step comprises inspecting the thin film (20) for the at least one change in properties, optionally wherein, when the determining step detects the at least one change in properties, removing the component (10) from service, and when the determining step does not detect the at least one change in properties, leaving the component (10) in service.

15. The method of any of claims 12 to 14, wherein the thin film (20) comprises an atomic layer deposited monolithic thin film (20) .
